# EUROPÄISCHE PATENTANMELDUNG

(11) **EP 1 642 762 A1**
(43) Veröffentlichungstag der Anmeldung: **05.04.2006**
(21) Anmeldenummer: 05106655.3
(22) Anmeldetag: 20.07.2005
(51) Int. Cl.: B60K 31/00

(54) **Verfahren und Vorrichtung zur Längsführung eines Kraftfahrzeugs**

(30) Priorität: 30.09.2004 DE 102004047462
(71) Anmelder: Robert Bosch GmbH, 70442 Stuttgart (DE)
(72) Erfinder: Zimmermann, Uwe, 71686 Remseck (DE); Scherl, Michael, 74321 Bietigheim (DE); Weilkes, Michael, 74343 Sachsenheim (DE)

(57) **Zusammenfassung**

Verfahren und Vorrichtung zur Längsführung eines Kraftfahrzeugs durch Ansteuerung der Antriebseinrichtungen und der Verzögerungseinrichtungen, die einen Objektdetektionssensor aufweist, der den Abstand und die Relativgeschwindigkeit eines vorherfahrenden Fahrzeugs ermittelt, die eine Bedieneinrichtung aufweist, mittels der der Fahrer eine Folgefahrfunktion oder eine Tempomatfunktion aktivieren kann, wobei die Fahrzeuggeschwindigkeit während der Folgefahrfunktion zwischen dem Stillstand und einer vorbestimmten Maximalgeschwindigkeit derart geschwindigkeitsgeregelt wird, dass das geregelte Fahrzeug dem vorherfahrenden Fahrzeug in einem vorbestimmten Abstand folgt und die Fahrzeuggeschwindigkeit während der Tempomatfunktion auf eine vom Fahrer vorgegeben Sollgeschwindigkeit regelt und eine Ansteuerung der Verzögerungseinrichtungen in dieser Funktion nur erfolgt, wenn die Fahrzeuggeschwindigkeit größer als die vom Fahrer vorgegebene Sollgeschwindigkeit ist.

## Beschreibung

Die vorliegende Erfindung betrifft ein Verfahren und eine Vorrichtung zur Längsführung eines Kraftfahrzeugs durch Ansteuerung der Antriebseinrichtungen und der Verzögerungseinrichtungen, wobei das Verfahren und die Vorrichtung einen Objektdetektionssensor vorsieht, der den Abstand und/oder die Relativgeschwindigkeit eines vorherfahrenden Fahrzeugs ermittelt, die eine Bedieneinrichtung aufweisen, mittels der der Fahrer eine Folgefahrfunktion oder eine Tempomatfunktion aktivieren kann, wobei die Fahrzeuggeschwindigkeit während der Folgefahrfunktion zwischen dem Stillstand und einer vorbestimmten Maximalgeschwindigkeit derart geschwindigkeitsgeregelt wird, dass das geregelte Fahrzeug dem vorherfahrenden Fahrzeug in einem bestimmten Abstand folgt und die Fahrzeuggeschwindigkeit während der Tempomatfunktion auf eine vom Fahrer vorgegebene Sollgeschwindigkeit regelt und eine Ansteuerung der Verzögerungseinrichtungen in dieser Funktion nur erfolgt, wenn die Fahrzeuggeschwindigkeit größer als die vom Fahrer vorgegebene Sollgeschwindigkeit ist.

### Stand der Technik

Aus der Veröffentlichung "adaptive cruise control system aspects and development trends" von Winner, Witte, Uhler, Lichtenberg erschienen auf der SAE International Congress and Exposition, 26.-29. 02.1996 ist ein adaptiver Fahrgeschwindigkeitsregler bekannt, der mittels Mikrowellenstrahlung vorherfahrende Fahrzeuge erkennt und bei Detektion eines vorherfahrenden Fahrzeugs eine Geschwindigkeitsregelung im Sinne einer Abstandskonstantregelung durchführt und bei Nichtvorhandensein eines vorrausfahrenden Objekts eine Geschwindigkeitsregelung im Sinne einer Geschwindigkeitskonstantregelung durchführt. Das Umschalten zwischen der Geschwindigkeitsregelung im Sinne einer Abstandskonstantregelung bzw. im Sinne einer Geschwindigkeitskonstantregelung erfolgt hierbei automatisch, je nachdem ob ein vorausbefmdliches Objekt als Zielobjekt erkannt wurde oder nicht. Diese Vorrichtung erlaubt es dem Fahrer nicht, das Fahrzeug mittels einer herkömmlichen Tempomatfunktion oder einer reinen Abstandsregelung zu betreiben, da das Umschalten zwischen diesen Funktionen nur durch die Regeleinrichtung automatisch erfolgt. Hierdurch verliert das System an Transparenz und ein Fahrer, der eine reine Tempomatregelfunktion oder eine reine Abstandsregelfunktion zur Fahrunterstützung wünscht, wird dieses System in den meisten Fällen nicht benutzen, da es nicht nach seinen Wünschen einstellbar ist.

### Kern und Vorteile der Erfindung

Der Kern der vorliegenden Erfindung ist es, ein Verfahren und eine Vorrichtung zur Längsführung eines Kraftfahrzeugs anzugeben, bei dem der Fahrer durch Betätigung eines Bedienelements zwischen einer Folgefahrfunktion, bei der die Fahrzeuggeschwindigkeit im Sinne einer reinen Abstandskonstantregelung oder einer Tempomatfunktion mit einer Geschwindigkeitsregelung im Sinne einer reinen Geschwindigkeitskonstantregelung auswählen kann, wodurch sich eine einfach verständliche Bedienphilosophie der Fahrzeuglängsführung ergibt, bei der der Fahrer des Fahrzeugs nicht durch eine automatische Umschaltung, wie sie aus dem Stand der Technik bekannt ist, überrascht wird. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterwesie wird der vorbestimmte Abstand der Folgefahrfunktion in Abhängigkeit der Fahrzeuggeschwindigkeit geregelt. Hierdurch ist es möglich, bei höheren Folgegeschwindigkeiten einen größeren Abstand einzuregeln und bei niedrigeren Folgegeschwindigkeiten einen kürzeren Folgeabstand einzuregeln. Hierdurch wird das natürliche Fahrverhalten nachempfunden, wobei es insbesondere vorgesehen sein kann, den Abstand derart in Abhängigkeit der Geschwindigkeit einzustellen, dass der Folgeabstand einer konstanten Zeitlücke zwischen dem vorausfahrenden und dem Folgefahrzeug entspricht. Weiterhin kann es vorgesehen sein, dass diese konstante Zeitlücke jedoch nicht kleiner als ein gewisser Mindestabstand, der beispielsweise ein Mindestsicherheitsabstand sein kann, werden kann.

Weiterhin ist es vorteilhaft, dass die vorbestimmte Maximalgeschwindigkeit der Folgefahrfunktion in Abhängigkeit der Sensorreichweite des Objektdetektionssensors festgelegt ist. Da für die Folgefahrfunktion der Abstand des eigenen Fahrzeugs zum vorausfahrenden Fahrzeug sowie der Relativgeschwindigkeit zwischen beiden Fahrzeugen für die Regelung notwendige Daten sind, ist es vorteilhaft, dass die Maximalgeschwindigkeit derart bemessen ist, dass der Vorausschaubereich des Objektdetektionssensors ausreichend groß ist, um innerhalb dieses Vorausschaubereichs das Fahrzeug automatisch in den Stillstand zu bremsen und gegebenenfalls hinter einem stehenden Fahrzeug anhalten zu können. Dies kann beispielsweise derart umgesetzt werden, dass eine maximale Regelgeschwindigkeit festgelegt wird, wobei diese fest im Steuergerät vorgegeben ist und so bemessen ist, dass der Vorausschaubereich des Objektdetektionssensors ausreichend groß ist.

Weiterhin ist es vorteilhaft, dass der Objektdetektionssensor in einer Entfernung von etwa 50 bis 60 Meter in etwa die Fahrbahnbreite der eigenen Fahrspur erfasst. Dies erreicht man beispielsweise, indem der Objektdetektionssensor eine Reichweite von etwa 60 Meter aufweist und einen Öffnungswinkel von etwa ± 2 Grad bis etwa ±4 Grad bezüglich der Sensorzentralachse aufweist. Mittels eines Objektdetektionsbereichs in dieser Größenordnung ist es möglich, vorherfahrende Fahrzeuge auf Autobahnen oder Landstraßen, die üblicherweise ausreichend große Kurvenradien haben, vorherfahrende Fahrzeuge auch bei Kurvenfahrten zu detektieren. Bei dieser Dimensionierung ist es ausreichend, einen Objektdetektionssensor ohne Winkelauflösung zu verwenden, der kostengünstiger als ein Objektdetektionssensor mit Winkelauflösung ist und lediglich die Größen Abstand d und Relativgeschwindigkeit vᵣₑₗ des detektierten Objekts ermittelt. Alternativ ist es jedoch auch möglich, diesen Erfassungsbereich mit einem winkelauflösenden Sensor zu erfassen, wodurch sich insbesondere bei Kurvenfahren Vorteile ergeben, da für Objekte am Rande der Sensorreichweite, also bei etwa 60 Meter, besser detektierbar ist, ob sich diese auf der eigenen Fahrspur oder einer benachbarten Fahrspur befinden.

Weiterhin ist es vorteilhaft, dass die vom Fahrer vorgebbare Sollgeschwindigkeit der Tempomatfunktion unabhängig von der Maximalgeschwindigkeit wählbar ist. Da die Tempomatfunktion eine Geschwindigkeitskonstantregelung durchführt, werden hierfür keine Sensordaten wie Abstand oder Relativgeschwindigkeit des vorherfahrenden Fahrzeugs benötigt. Da diese Funktion ohne Objektdetektionssensordaten auskommt, ist die Reichweite des Objektdetektionssensors auch kein begrenzender Faktor für die maximal einstellbare Sollgeschwindigkeit, weshalb die Sollgeschwindigkeit beliebig hoch einstellbar ist und nicht durch eine im System fest vorgegebene Geschwindigkeitsgrenze limitiert wird. Daher ist es auch vorteilhaft, dass die vorgegebene Sollgeschwindigkeit des Fahrers unabhängig von der Maximalgeschwindigkeit der Folgefahrfunktion wählbar ist.

Weiterhin ist es vorteilhaft, dass während aktivierter Tempomatfunktion bei Unterschreitung eines vorbestimmten Mindestabstands zum vorausfahrenden Fahrzeug eine Warnung ausgegeben wird. Diese dient lediglich als Fahrerinformation, wobei auch hier der vorbestimmte Mindestabstand beispielsweise geschwindigkeitsabhängig ausführbar sein kann. Weiterhin ist es vorteilhaft, dass bei aktivierter Tempomatfunktion die Fahrzeugbremsen ansteuerbar sind, jedoch nur dann, wenn die vom Fahrer vorgegebene Sollgeschwindigkeit durch die Fahrzeugistgeschwindigkeit überschritten wird, was beispielsweise bei Bergabfahrten oder bei einer fahrerbetätigten Absenkung der Sollgeschwindigkeit geschehen kann. Nur in diesen Fällen ist eine Bremsenbetätigung bei aktivierter Tempomatfunktion vorgesehen.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von Ihrer Zusammenfassung in den Patentansprüchen oder deren Rückbeziehung sowie unabhängig von Ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemä-ßen Vorrichtung und
- Figur 2: ein Zustandsdiagramm mit Verfahrensabläufen einer Ausführungsform des erfindungsgemäßen Verfahrens.

### Beschreibung von Ausführungsbeispielen

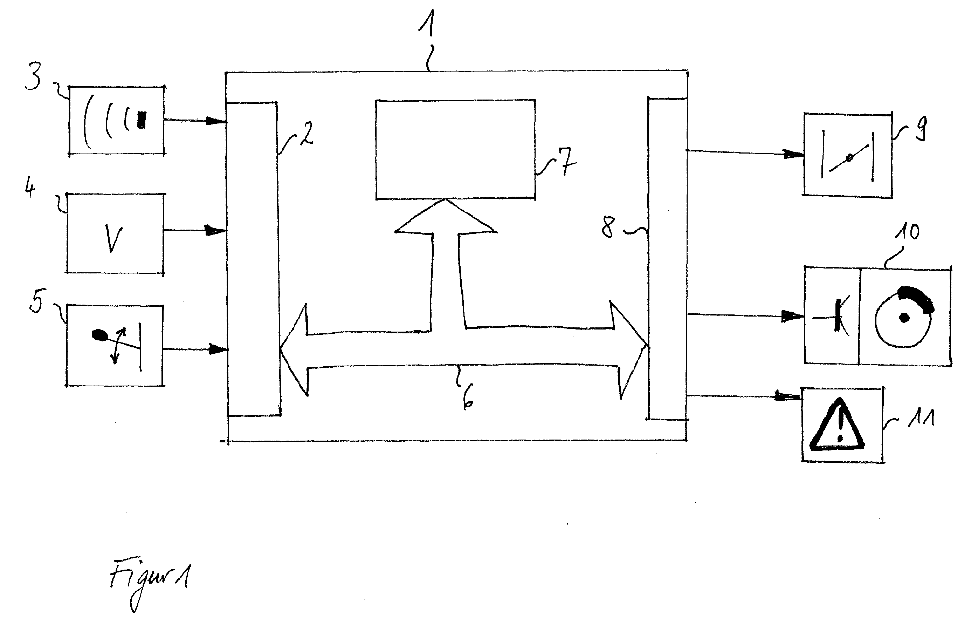

In Figur 1 ist ein Folgeregel-/Tempomat-Steuergerät 1 dargestellt, das unter anderem eine Eingangsschaltung 2 aufweist. Mittels der Eingangsschaltung 2 sind dem Folgeregel-/Tempomat-Steuergerät 1 Eingangssignale zuführbar. Diese Eingangssignale stammen beispielsweise von einer Objektdetektionssensorik 3, die als Radar- oder Lidar-System ausgeführt sein kann und elektromagnetische Strahlung aussendet, die an vorherfahrenden Objekten reflektiert werden, wobei die zurückreflektierten elektromagnetischen Wellen wieder empfangen werden. Mittels der Auswertung der Empfangssignale der Objektdetektionssensorik 3 ist es möglich, den Abstand d zwischen dem eigenen Fahrzeug und dem vorherfahrenden Fahrzeug sowie die Relativgeschwindigkeit vᵣₑₗ des vorherfahrenden Fahrzeugs bezüglich des eigenen Fahrzeugs zu ermitteln. Weiterhin wird der Eingangsschaltung 2 ein Signal v zugeführt, das die Geschwindigkeit des eigenen Fahrzeugs repräsentiert. Dieses Signal stammt von einem Geschwindigkeitssensor 4, der die Geschwindigkeit v des eigenen Fahrzeugs misst und dem Folgeregel-/Tempomat-Steuergerät 1 zuführt. Weiterhin ist eine fahrerbetätigbare Bedieneinrichtung 5 vorgesehen, mittels der das Folgeregel-/Tempomat-Steuergerät 1 aktiviert und deaktiviert werden kann sowie Einstellungen dieser Einrichtung verändert werden können, so dass der Fahrer das Folgeregel-/Tempomat-Steuergerät 1 nach seinen Wünschen einstellen kann. Diese Eingangssignale, die dem Folgeregel-/Tempomat-Steuergerät 1 zugeführt werden, werden von der Eingangsschaltung 2 mittels einer Datenaustauscheinrichtung 6 an eine Berechnungseinrichtung 7 weitergeleitet. In der Berechnungseinrichtung 7 werden in Abhängigkeit der Eingangssignale Ausgangssignale ermittelt, die an nachgeordnete Stellelemente ausgegeben werden. So wird beispielsweise bei aktivierter Folgefahrfunktion in Abhängigkeit des Abstands d, der Relativgeschwindigkeit Vᵣₑₗ sowie der eigenen Fahrzeuggeschwindigkeit v entschieden, ob das eigene Fahrzeug zur Folgefahrt beschleunigt oder verzögert werden muss und dementsprechend Stellsignale für nachgeordnete Stellelemente 9, 10 generiert werden. Bei aktivierter Tempomatfunktion wird aus der Eingangsgröße der eigenen Geschwindigkeit v sowie der durch den Fahrer mittels der Bedieneinrichtung 5 vorgegebenen Sollgeschwindigkeit Vₛₒₗₗ ein Beschleunigungsbedarf ermittelt, der an das nachgeordnete, leistungsbestimmende Stellelement 9 ausgegeben wird. Die von der Berechnungseinrichtung 7 mittels des erfindungsgemäßen Verfahrens ermittelten Stellsignale werden mittels der Datenaustauscheinrichtung 6 an eine Ausgangsschaltung 8 ausgegeben. An der Ausgangsschaltung 8 sind die nachgeordneten Stellelemente 9,10, 11 angeschlossen, wobei ein Beschleunigungsbedarfssignal an ein leistungsbestimmendes Stellelement 9 der Antriebseinrichtung ausgebbar ist. Dieses leistungsbestimmende Stellelement 9 kann beispielsweise als elektrisch ansteuerbare Drosselklappe oder als Kraftstoffmengenzumesseinrichtung eines Kraftstoffeinspritzsystems ausgebildet sein. Weiterhin werden Stellsignale, die eine Verzögerung des Fahrzeugs vorsehen, an die Verzögerungseinrichtung 10 des Fahrzeugs ausgegeben, wobei diese Verzögerungseinrichtung einen elektronisch steuerbaren Bremskraftverstärker aufweist, der einen durch das Stellsignal vorgegebenen Bremsdruck oder eine Bremskraft aufbaut und das Fahrzeug entsprechend der geforderten Verzögerung verlangsamt. Vorteilhafterweise kann es weiter vorgesehen sein, dass die Ausgangsschaltung 8 ein Warnsignal an eine Fahrerwarneinrichtung 11 ausgibt, die den Fahrer bei aktivierter Tempomatfunktion warnt, falls das eigene Fahrzeug einen Mindestabstand dₘᵢₙ zum vorausfahrenden Fahrzeug unterschreitet. Diese Fahrerwarneinrichtung 11 kann beispielsweise als Kontrollleuchte im Armaturenbrett oder als Anzeige einer Displayeinrichtung im Fahrzeug vorgesehen sein und/oder als akustische Warneinrichtung ausgeführt sein, wobei ein Warnton oder eine Ansage mit Textausgabe den Fahrer auf die Warnsituation hinweist.

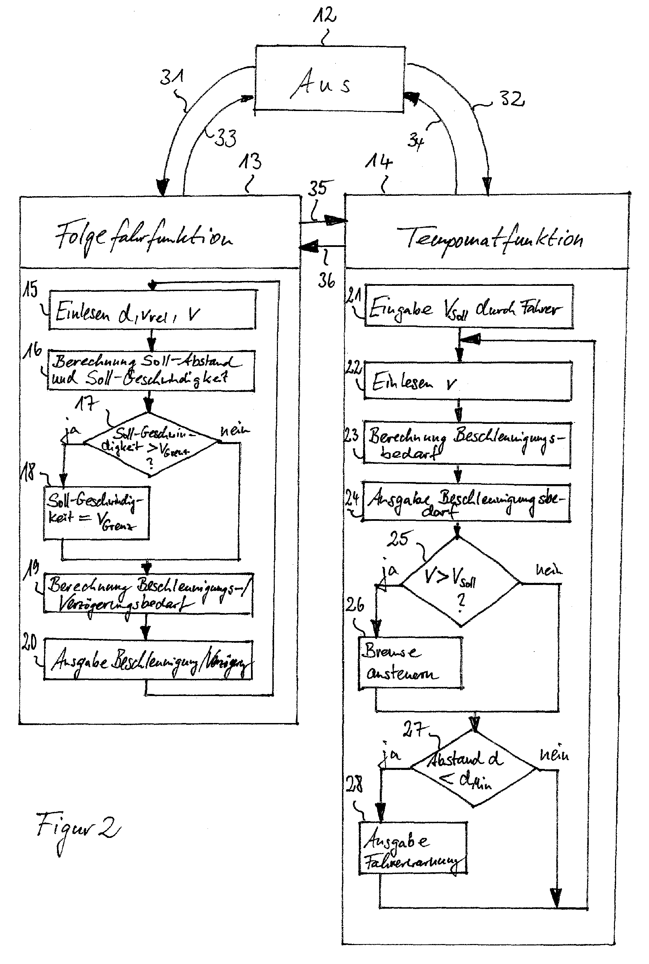

In Figur 2 sind die Betriebszustände des Folgeregel-/Tempomat-Steuergeräts 1 mit entsprechenden Ablaufdiagrammen der Verfahren dargestellt. Zustand 12 kennzeichnet hierbei den Betriebszustand "Aus", in dem weder die Folgefahrfunktion 13, noch die Tempomatfunktion 14 aktiviert ist. Betätigt der Kraftfahrzeugfahrer das Bedienelement 5, so kann er je nach Betätigungssignal entweder die Folgefahrfunktion 13 oder die Tempomatfunktion 14 aktivieren, was durch die Pfeile 31 und 32 dargestellt ist. Ist die Folgefahrfunktion 13 oder die Tempomatfunktion 14 aktiviert, so kann der Fahrer durch Betätigung der Bedienelemente 5 jederzeit diese Assistenzfunktionen ausschalten, was durch die Übergangspfeile 33 und 34 veranschaulicht ist. Ist momentan die Folgefahrfunktion 13 aktiviert, so kann der Fahrer ebenfalls durch Betätigung des Bedienelements 5 diese Folgefahrfunktion deaktivieren, indem die Tempomatfunktion 14 eingeschaltet wird. Diese Fahrerbetätigung ist durch den Übergangspfeil 35 dargestellt. Ebenfalls ist es möglich, bei eingeschalteter Tempomatfunktion 14 durch Aktivierung der Folgefahrfunktion 13 die Tempomatfunktion 14 zu deaktivieren und die Folgefahrfunktion 13 einzuschalten. Dieser Betriebszustandsübergang ist durch den Pfeil 36 in Figur 2 dargestellt. Die Folgefahrfunktion 13 sowie die Tempomatfunktion 14 bilden dementsprechend eigenständige Funktionen, die jeweils aktiviert werden können, jedoch nicht gleichzeitig in Betrieb sein können. Hat der Fahrer die Folgefahrfunktion 13 aktiviert, so wird in der Berechnungseinrichtung 7 des Folgefahr-/Tempomat-Steuergeräts 1 eine Folgefahrfunktion ausgeführt, die das Fahrzeug im Sinne einer Abstandskonstantregelung geschwindigkeitsregelt. Hierzu werden nach Schritt 15 die Sensorgrößen Abstand d des eigenen Fahrzeugs zum vorherfahrenden Fahrzeug, die Relativgeschwindigkeit Vᵣₑₗ des vorherfahrenden Fahrzeugs bezüglich des eigenen Fahrzeugs sowie die eigene Fahrzeuggeschwindigkeit v eingelesen. Im nachfolgenden Schritt 16 wird in Abhängigkeit dieser Sensoreingangsgrößen ein Sollabstand dₛₒₗₗ gebildet, in dem das eigene Fahrzeug hinter dem vorherfahrenden Fahrzeug geregelt werden soll. In Abhängigkeit dieses Sollabstandes wird eine Sollgeschwindigkeit des eigenen Fahrzeugs ermittelt, die zur Einregelung des Sollabstandes dₛₒₗₗ geeignet ist. Im folgenden Schritt 17 wird abgefragt, ob die in Schritt 16 berechnete Sollgeschwindigkeit vₛₒₗₗ größer als eine im Folgeregel-/Tempomat-Steuergerät 1 vorgegebene Grenzgeschwindigkeit v_{grenz} ist. Ist die in Schritt 16 berechnete Sollgeschwindigkeit vₛₒₗₗ größer als die Grenzgeschwindigkeit v_{grenz}, so wird die Sollgeschwindigkeit auf die Grenzgeschwindigkeit begrenzt, indem die Grenzgeschwindigkeit als neue Sollgeschwindigkeit Vₛₒₗₗ übernommen wird, was in Schritt 18 dargestellt ist. Ist in Schritt 17 die berechnete Sollgeschwindigkeit kleiner oder gleich der Grenzgeschwindigkeit V_{grenz}, so wird die in Schritt 16 berechnete Sollgeschwindigkeit dₛₒₗₗ beibehalten. Die Begrenzung der Sollgeschwindigkeit dₛₒₗₗ auf die maximale Grenzgeschwindigkeit V_{grenz} hat hierbei den Sinn, dass zur Folgefahrfunktion ein Abstandssensor mit begrenzter Sensorreichweite verwendet wird. Da innerhalb des Sensorerfassungsbereichs das Fahrzeug eventuell. bis in den Stillstand abgebremst werden muss, da ein Fahrzeug auf der Fahrbahn angehalten hat, ist es notwendig, dass eine obere Maximalgeschwindigkeit V_{grenz} defmiert wird, die in Abhängigkeit der Sensorreichweite bemessen ist. Diese Maximalgeschwindigkeit V_{grenz} ist als feste Grenzgeschwindigkeit in der Berechnungseinrichtung 7 abgespeichert. Anschließend wird in Schritt 19 ein Beschleunigungs- bzw. Verzögerungsbedarf berechnet, der notwendig ist, um die Sollgeschwindigkeit dₛₒₗₗ einzuregeln, um das Fahrzeug im Sollabstand dₛₒₗₗ hinter dem vorherfahrenden Fahrzeug zu führen. Dieser Beschleunigungs- bzw. Verzögerungsbedarf aₛₒₗₗ wird in Schritt 20 als Beschleunigungsanforderung bzw. als Verzögerungsanforderung vom Folgeregel-/Tempomat-Steuergerät 1 an des leistungsbestimmende Stellelement 9 der Antriebseinrichtung des Fahrzeugs bzw. die Verzögerungseinrichtungen 10 des Fahrzeugs ausgegeben und von diesen Stellelementen 9, 10 umgesetzt. Nach Ausgabe des Beschleunigungs- bzw. Verzögerungsbedarfs aₛₒₗₗ in Schritt 20 wird dieses Verfahren wieder, beginnend mit Schritt 15, durchlaufen, wodurch sich eine ständig wiederholende Folgefahrfunktion ergibt.

Wurde durch den Fahrer mittels der Bedieneinrichtung 5 die Tempomatfunktion 14 aktiviert, so wird zu Beginn in Schritt 21 eine Sollgeschwindigkeit Vₛₒₗₗ durch den Fahrer vorgegeben. Weiterhin wäre es auch denkbar, dass die Sollgeschwindigkeit Vₛₒₗₗ, die bei letztmaliger Benutzung der Tempomatfunktion 14 aktiviert war in einem Speicher abgespeichert wurde und nach Starten der Tempomatfunktion 14 in Schritt 21 wieder ausgelesen wird und als neue Sollgeschwindigkeit Vₛₒₗₗ weiterverwendet wird, sofern der Fahrer keine neue Sollgeschwindigkeit Vₛₒₗₗ eingibt. Im darauffolgenden Schritt 22 wird die momentane Fahrzeuggeschwindigkeit v, die mittels des Geschwindigkeitssensors 4 ermittelt wurde, eingelesen. Im folgenden Schritt 23 wird aus der aktuellen Fahrzeuggeschwindigkeit v sowie der vorgegebenen Sollgeschwindigkeit Vₛₒₗₗ ein Beschleunigungsbedarf aₛₒₗₗ berechnet, der im Falle, dass die momentane Fahrzeuggeschwindigkeit v kleiner als die Sollgeschwindigkeit Vₛₒₗₗ ist, das Fahrzeug auf die Sollgeschwindigkeit Vₛₒₗₗ beschleunigt, indem dieser Beschleunigungsbedarf aₛₒₗₗ im folgenden Schritt 24 an des leistungsbestimmende Stellelement 9 ausgegeben wird, das die Antriebseinrichtung des Fahrzeugs derart ansteuert, dass das Fahrzeug entsprechend beschleunigt wird. Im folgenden Schritt 25 wird geprüft, ob die momentane Fahrzeuggeschwindigkeit v größer ist als die Sollgeschwindigkeit Vₛₒₗₗ, die durch den Fahrer vorgegeben wurde. Ist dieses der Fall, das heisst das Fahrzeug ist schneller als die vorgegebene Sollgeschwindigkeit Vₛₒₗₗ, so werden gemäß Schritt 26 die Verzögerungseinrichtungen 10 angesteuert und das Fahrzeug auf die Sollgeschwindigkeit Vₛₒₗₗ abgebremst. Dieser Fall kann eintreten, sofern das Fahrzeug eine Bergabfahrt hinunterfährt und durch den Hangabtrieb über die Sollgeschwindigkeit Vₛₒₗₗ hinaus beschleunigt wird oder indem der Fahrer die Sollgeschwindigkeit Vₛₒₗₗ durch Eingabe einer kleineren Sollgeschwindigkeit Vₛₒₗₗ als die momentane Geschwindigkeit v erfolgt und damit das Fahrzeug durch einen Bremseneingriff abgebremst wird. Ist die momentane Geschwindigkeit v kleiner oder gleich der Sollgeschwindigkeit Vₛₒₗₗ, so verzweigt Schritt 25 nach "nein" und wird in Abfrage 27 fortgeführt, In Schritt 27 wird geprüft, ob der Abstand d, der auch während aktivierter Tempomatfunktion dem Folgeregel-/Tempomat-Steuergerät 1 von der Objektdetektionssensorik 3 zur Verfügung gestellt wird, kleiner als ein Mindestabstand dₘᵢₙ ist. Dieser Mindestabstand dₘᵢₙ kann beispielsweise geschwindigkeitsabhängig vorgegeben sein und einen minimalen Sicherheitsabstand repräsentieren. Wird durch die Tempomatfunktion das eigene Fahrzeug derart geregelt, dass dieser Mindestabstand dₘᵢₙ zum vorherfahrenden Fahrzeug unterschritten wird, so verzweigt Schritt 27 nach "ja" und es wird in Schritt 28 eine Fahrerwarnung ausgegeben, indem das Folgeregel-/Tempomat-Steuergerät 1 eine Fahrerwarneinrichtung 11 aktiviert und den Fahrer auf den zu geringen Mindestabstand hinweist. Ist der Abstand d gemäß Schritt 27 größer oder gleich als der Mindestabstands dₘᵢₙ, so verzweigt das Verfahren nach "nein" und wird in Schritt 22 fortgeführt. Ist das Verfahren in Schritt 27 nach "ja" verzeigt, so wird nach Ausgabe der Fahrerwarnung in Schritt 28 das Verfahren ebenfalls in Schritt 22 fortgesetzt, so dass sich eine ständig wiederholende Geschwindigkeitsregelschleife ergibt.

## Patentansprüche

1. Vorrichtung zur Längsführung eines Kraftfahrzeugs durch Ansteuerung der Antriebseinrichtungen (9) und der Verzögerungseinrichtungen (10), die einen Objektdetektionssensor (3) aufweist, der den Abstand (d) und/oder die Relativgeschwindigkeit (Vᵣₑₗ) eines vorherfahrenden Fahrzeugs ermittelt, die eine Bedieneinrichtung (5) aufweist, mittels der der Fahrer eine Folgefahrfunktion (13) oder eine Tempomatfunktion (14) aktivieren kann, wobei die Fahrzeuggeschwindigkeit (v) während der Folgefahrfunktion (13) zwischen dem Stillstand und einer vorbestimmten Maximalgeschwindigkeit (v_{grenz}) derart geschwindigkeitsgeregelt wird, dass das geregelte Fahrzeug dem vorherfahrenden Fahrzeug in einem vorbestimmten Abstand (dₛₒₗₗ) folgt und die Fahrzeuggeschwindigkeit (v) während der Tempomatfunktion (14) auf eine vom Fahrer vorgegeben Sollgeschwindigkeit (vₛₒₗₗ) regelt und eine Ansteuerung der Verzögerungseinrichtungen (10) in dieser Funktion nur erfolgt, wenn die Fahrzeuggeschwindigkeit (v) größer als die vom Fahrer vorgegebene Sollgeschwindigkeit (Vₛₒₗₗ) ist.

2. Vorrichtung nach Anspruch 1, **dadurch gekennzeichnet, dass** der vorbestimmte Abstand (dₛₒₗₗ) der Folgefahrfunktion (13) in Abhängigkeit der Fahrzeuggeschwindigkeit (v) geregelt wird.

3. Vorrichtung nach Anspruch 1 oder 2, **dadurch gekennzeichnet, dass** die vorbestimmte Maximalgeschwindigkeit (V_{grenz}) der Folgefahrfunktion (13) in Abhängigkeit der Sensorreichweite des Objektdetektionssensors (3) festgelegt ist.

4. Vorrichtung nach einem der vorhergehenden Ansprüche, **dadurch gekennzeichnet**, der Objektdetektionssensor in einer Entfernung von 50 bis 60 Meter in etwa die Fahrbahnbreite der eigenen Fahrspur erfasst.

5. Vorrichtung nach einem der vorhergehenden Ansprüche, **dadurch gekennzeichnet, dass** die vom Fahrer vorgegebbare Sollgeschwindigkeit (Vₛₒₗₗ) der Tempomatfunktion (14) unabhängig von der Maximalgeschwindigkeit (V_{grenz}) wählbar ist.

6. Vorrichtung nach einem der vorhergehenden Ansprüche, **dadurch gekennzeichnet, dass** während aktivierter Tempomatfunktion (14) bei Unterschreitung eines vorbestimmten Mindestabstands (dₘᵢₙ) zum vorausfahrenden Fahrzeug eine Warnung ausgegeben wird.

7. Verfahren zur Längsführung eines Kraftfahrzeugs durch Ansteuerung der Antriebseinrichtungen (9) und der Verzögerungseinrichtungen (10), wobei der Abstand (d) und/oder die Relativgeschwindigkeit (vᵣₑₗ) eines vorherfahrenden Fahrzeugs mittels eines Objektdetektionssensor (3) ermittelt wird, und wobei der Fahrer mittels einer Bedieneinrichtung (5) eine Folgefahrfunktion (13) oder eine Tempomatfunktion (14) aktivieren kann, wobei die Fahrzeuggeschwindigkeit (v) während der Folgefahrfunktion (13) zwischen dem Stillstand und einer vorbestimmten Maximalgeschwindigkeit (V_{grenz}) derart geschwindigkeitsgeregelt wird, dass das geregelte Fahrzeug dem vorherfahrenden Fahrzeug in einem vorbestimmten Abstand (dₛₒₗₗ) folgt und die Fahrzeuggeschwindigkeit (v) während der Tempomatfunktion (14) auf eine vom Fahrer vorgegeben Sollgeschwindigkeit (Vₛₒₗₗ) regelt und eine Ansteuerung der Verzögerungseinrichtungen (10) in dieser Funktion (14) nur erfolgt, wenn die Fahrzeuggeschwindigkeit (v) größer als die vom Fahrer vorgegebene Sollgeschwindigkeit (Vₛₒₗₗ) ist.

8. Verfahren nach Anspruch 7, **dadurch gekennzeichnet, dass** der vorbestimmte Abstand (dₛₒₗₗ) der Folgefahrfunktion in Abhängigkeit der Fahrzeuggeschwindigkeit geregelt wird.

9. Verfahren nach Anspruch 7 oder 8, **dadurch gekennzeichnet, dass** die vorbestimmte Maximalgeschwindigkeit (V_{grenz}) der Tempomatfunktion (14) in Abhängigkeit der Sensorreichweite des Objektdetektionssensors (3) festgelegt ist.

10. Verfahren nach einem der Ansprüche 7 bis 9, **dadurch gekennzeichnet, dass** die vom Fahrer vorgegebbare Sollgeschwindigkeit (Vₛₒₗₗ) der Tempomatfunktion (14) unabhängig von der Maximalgeschwindigkeit (V_{grenz}) wählbar ist.

11. Verfahren nach einem der Ansprüche 7 bis 10, **dadurch gekennzeichnet, dass** während aktivierter Tempomatfunktion (14) bei Unterschreitung eines vorbestimmten Mindestabstands (dₘᵢₙ) zum vorausfahrenden Fahrzeug eine Warnung (11) ausgegeben wird.
